(19) Europäisches Patentamt
European Patent Office
Office européen des brevets

(11) **EP 1 844 220 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: **06705896.6**

(22) Anmeldetag: **01.02.2006**

(51) Int Cl.:
*F01N 11/00* (2006.01)   *F02D 41/02* (2006.01)
*F02D 41/14* (2006.01)

(86) Internationale Anmeldenummer:
**PCT/DE2006/000167**

(87) Internationale Veröffentlichungsnummer:
**WO 2006/081809 (10.08.2006 Gazette 2006/32)**

(54) **VERFAHREN ZUR DIAGNOSE DES ALTERUNGSGRADES EINES IM ABGASKANAL EINER BRENNKRAFTMASCHINE ANGEORDNETEN KATALYSATORS**

METHOD FOR DIAGNOSING THE DEGREE OF AGEING OF A CATALYST ARRANGED IN THE EXHAUST GAS CHANNEL OF AN INTERNAL COMBUSTION ENGINE

PROCEDE DE DIAGNOSTIC DU DEGRE DE VIEILLISSEMENT D'UN CATALYSEUR PLACE DANS LE CONDUIT D'ECHAPPEMENT D'UN MOTEUR A COMBUSTION INTERNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.02.2005 DE 102005004670**

(43) Veröffentlichungstag der Anmeldung:
**17.10.2007 Patentblatt 2007/42**

(73) Patentinhaber: **IAV GmbH**
**Ingenieurgesellschaft Auto und Verkehr**
**10587 Berlin (DE)**

(72) Erfinder:
• **BERGER, Ulrich**
  **38518 Gifhorn (DE)**

• **LAPPE, Stefan**
  **38553 Wasbüttel (DE)**
• **WILKENS, Olaf**
  **38108 Braunschweig (DE)**

(74) Vertreter: **Buss, Fritz Gerd**
**IAV GmbH**
**Ingenieurgesellschaft Auto und Verkehr**
**Kauffahrtei 45**
**09120 Chemnitz (DE)**

(56) Entgegenhaltungen:
**WO-A-20/04007922      DE-A1- 10 137 134**
**DE-A1- 19 801 626      US-A1- 2004 139 732**
**US-B1- 6 499 290**

EP 1 844 220 B1

**Beschreibung**

Die Erfindung betrifft ein Verfahren zur Diagnose des Alterungsgrades eines im Abgaskanal einer Brennkraftmaschine angeordneten Katalysators mit den im Oberbegriff des Patentanspruches 1 genannten Merkmalen.

Durch den Gesetzgeber wird für Kraftfahrzeuge ein ständig kleiner werdender Schadstoffausstoß gefordert. Im Zusammenhang damit, muss die Funktionsfähigkeit der Abgasanlage des Kraftfahrzeuges ständig dahingehend überwacht werden, ob der Katalysator noch die zur Einhaltung der Abgasgrenzwerte erforderliche Konvertierungsleistung besitzt. Eine sogenannte On-Board-Diagnostik (OBD) in Kraftfahrzeugen überwacht unter anderem die Funktionsfähigkeit der Abgasanlage hinsichtlich ihrer Konvertierungsleistung gegenüber den Schadstoffen.

Beim gegenwärtigen Stand der Technik kann die Abgasqualität nicht direkt durch die Messung der Schadstoffe geprüft werden. Man behilft sich daher mit der Bestimmung der Sauerstoff-Speicherkapazität des Katalysators (Oxygen Storage Capacity - OSC), mit der die Konvertierungsfähigkeit des Katalysators dargestellt wird. So ist beispielsweise aus der DE 42 11 116 A1, der DE 199 53 601 C2, der DE 198 01 626 A1 sowie aus der DE 103 05 452 A1 ein Verfahren zur Bestimmung der Sauerstoff-Speicherkapazität des Katalysators vorbekannt, bei dem jeweils vor und nach dem Abgaskatalysator eine Abgassonde angeordnet ist, die mit einer Auswerteeinrichtung, beispielsweise einem Motorsteuergerät, verbunden ist. Zur Ermittlung der Sauerstoff-Speicherkapazität des Katalysators wird der Brennkraftmaschine periodisch wechselnd ein in seiner Zusammensetzung unterschiedliches Luft/Kraftstoff-Gemisch zugeführt, so dass dem Katalysator ein Abgas mit Sauerstoffüberschuss (magere Gemischzusammensetzung) sowie ein Abgas mit Sauerstoffmangel (fette Gemischzusammensetzung) zugeführt wird. Wird der Motor mager betrieben ($\lambda > 1$), liegt im Abgas eine höhere $O_2$-Konzentration vor, als es der Stöchiometrie entspricht. Mit diesem Überschuss wird das Cer im Washcoat des Katalysators von der Oxidationsstufe +3 auf +4 oxidiert und eine entsprechende $O_2$-Menge in das Ceroxid-Gitter eingebaut. Sauerstoff wird so während der mageren Phasen gespeichert.

Im fetten Betrieb ($\lambda < 1$) besteht ein Überschuss an CO und Kohlenwasserstoffen (HC) im Abgas. Jetzt erfolgt die Rückreaktion des gespeicherten $O_2$, indem vor allem CO am Edelmetall sorbiert wird, von dort auf der Washcoat-Oberfläche zum reaktiven $Cer^{4+}$ diffundiert ("spill over") und hier mit einem gespeicherten Sauerstoffatom zu $CO_2$ reagiert. Das Cer bleibt in der Oxidationsstufe +3 zurück.

Zum Bestimmen der Sauerstoff-Speicherkapazität des Katalysators werden durch das Motorsteuergerät sprunghafte Wechsel zwischen einer fetten und mageren Gemischzuführung erzeugt, deren Verlauf durch die vor und nach dem Katalysator angeordneten Abgassonden ($\lambda$-Sonden) verfolgt wird. Weil der Katalysator bei einem fett-mager-Sprung $O_2$ speichert bzw. bei einem mager-fett-Sprung $O_2$ abgibt und dabei den CO/HC-Überschuss im fetten Abgas abbaut, wird die nach-Kat.-Antwort durch die nachgeschaltete Abgassonde zeitverzögert registriert. Die $O_2$-Speicherung bzw. die $O_2$-Abgabe erfolgt so lange, bis der $O_2$-Speicher komplett gefüllt bzw. geleert ist. Die Zeitverzögerung der Sprungantwort nach dem Katalysator ist somit ein Maß für die Sauerstoff-Speicherkapazität des Katalysators (OSC). Zur Festlegung des Sprungzeitpunktes wird vorzugsweise jeweils der $\lambda = 1$-Durchgang der Sondenspannung verwendet. Die Abnahme der Sauerstoff-Speicherkapazität bis auf einen bestimmten Wert wertet die Fahrzeugelektronik als unzulässige Schädigung des Katalysators und damit als zu meldenden Fehler.

Nachteilig bei der Ermittlung der Sauerstoff-Speicherkapazität des Katalysators entsprechend dem beschriebenen Stand der Technik ist, dass dieses Verfahren Fehlerquellen hinsichtlich der Genauigkeit des tatsächlichen Zustandes des Katalysators beinhaltet. So ist es möglich, dass die Alterung des Katalysators zu einer Verschlechterung der Edelmetall-Aktivität, aber nicht zu einer Abnahme der Sauerstoff-Speicherkapazität führt. Eine ggf. eingetretene Überschreitung der Schadstoffgrenzwerte würde demnach verborgen bleiben und eine Fehlermeldung unterbleibt.

Auf der anderen Seite kann es Katalysatoren geben, die zwar stark an Sauerstoff-Speicherkapazität verlieren, aber trotzdem weiter ausreichend konvertieren. Der durch die On-Board-Diagnostik gemeldete Fehler würde in diesem Fall zum Austausch eines intakten Katalysators führen, was unwirtschaftlich ist.

Aus der DE 101 37 134 B4 ist ein Verfahren bekannt, mit dem die Alterung des Speicherkatalysators erkannt werden kann. Dabei wird in einem Teillastbetriebpunkt der Brennkraftmaschine eine Diagnose zur Erkennung der Alterung des Katalysators in Abhängigkeit von der ermittelten Temperatur durchgeführt. Die Temperatur wird in und/oder nach dem Katalysator gemessen, wobei sich die Temperatur bzw. eine daraus ermittelte Temperaturerhöhung in Abhängigkeit von der Alterung des Katalysators verändert. Je geringer die Konvertierungsfähigkeit des Katalysators alterungsbedingt noch ist, desto geringer ist die Temperaturerhöhung. Damit wird aus der Temperaturerhöhung auf den Alterungszustand des Katalysators geschlossen.

Nachteilig bei diesem Verfahren ist, dass die Bestimmung der Alterung des Katalysators in Abhängigkeit von dessen Temperatur ebenfalls stark fehlerbehaftet ist. Ein genauer Alterungsgrad des Katalysators und Rückschlüsse hinsichtlich der möglichen Ursachen einer frühzeitigen Alterung lassen sich mit dieser Methode nicht realisieren. Außerdem ist eine exakte Temperaturerfassung des Katalysators schwierig durchzuführen.

Der Erfindung liegt die Aufgabe zugrunde, ein Verfahren zur Bestimmung des Alterungsgrades eines im Abgaskanal einer Brennkraftmaschine angeordneten Katalysators zu schaffen, mit dem bei einem geringen Messaufwand der Alterungsgrad eines Katalysators genauer und zuverlässiger beurteilt werden kann.

Diese Aufgabe wird erfindungsgemäß durch die kennzeichnenden Merkmale des Patentanspruches 1 gelöst.

Durch die Verknüpfung des Grades der Edelmetallsinterung des Katalysators mit dem Grad des Schädigungszustandes der Washcoatstruktur des Katalysators, die jeweils aus der Sauerstoff-Speicherkapazität des Katalysators ermittelt werden, lässt sich mit geringem Messaufwand ein zuverlässiger Wert des Alterungsgrades des Katalysators bestimmen. Fehlerquellen hinsichtlich einer möglichen nicht erkannten Überschreitung der Schadstoffgrenzwerte des Katalysators bzw. einer Fehlinterpretation des tatsächlichen Alterungsgrades des Katalysators werden dadurch weitestgehend vermieden.

Die Erfindung wird nachfolgend anhand eines Ausführungsbeispieles näher beschrieben.

Die Sauerstoff-Speicherkapazitätsbestimmung des Katalysators (OSC-Bestimmung) erfolgt anhand der Auswertung der Signale der vor und nach dem Katalysator angeordneten Abgassonden ($\lambda$-Sonden) bei einem fett-mager-Sprung und bei einem mager-fett-Sprung der der Brennkraftmaschine zugeführten Luft/Kraftstoff-Verhältnisse. Dabei hat sich gezeigt, dass aufgrund der unterschiedlichen Mechanismen des Katalysators für die $O_2$-Speicherung und für die $O_2$-Freisetzung im Zuge der Katalysatoralterung die mager-fett-OSC wesentlich stärker abnimmt, als die fett-mager-OSC.

Weil die Auffüllung des $O_2$-Speichers bei der fett-mager-OSC direkt über die Grenzfläche Gasphase/Washcoat erfolgt, ist die fett-mager-OSC recht alterungsstabil, d.h. sie bleibt nahezu konstant, auch wenn das Edelmetall durch die sog. Sinterung schon stark an Konvertierungsleistung eingebüßt hat. Lediglich, wenn hohe Temperaturen die Washcoatstruktur schädigen, sinkt auch die fett-mager-OSC ab.

Bei der mager-fett-OSC wird die Geschwindigkeit der Reaktion von CO mit gespeichertem Sauerstoff ($O^{2-}$) hingegen wesentlich durch den Diffusionsvorgang vom Edelmetall zu dem über den gesamten Washcoat verteilten $Cer^{4+}$ bestimmt. Der mittlere Abstand, der bei dieser Diffusion überwunden werden muss, ist proportional zum mittleren Abstand der Edelmetallteilchen. Sind diese infolge Alterung stark gesintert, wird der mittlere Abstand zwischen ihnen deutlich größer, weil die gesamte Edelmetallmenge in weniger und größeren Teilchen konzentriert ist. Dadurch dauert die CO-Diffusion von den Metallteilchen zu dem an der gesamten Washcoatoberfläche gespeicherten Sauerstoff länger, und die Reaktion $CO + 2Ce^{4+} + O^{2-} \rightarrow CO_2 + 2Ce^{3+}$ wird langsamer. Durch diese Verlangsamung der CO-Reaktion steigt die CO-Konzentration nach Katalysator schneller an, als gemäß "wahrer OSC" zu erwarten wäre. Nach einem mager-fett-Sprung wird also der $\lambda=1$ - Punkt schon erreicht, bevor der $O_2$-Speicher völlig entleert ist. Der restliche Sauerstoff reagiert danach langsam ab, bevor der nächste fett-mager-Sprung erfolgt. Nach diesem Sprung wird der Speicher wieder komplett gefüllt und die vollständige fett-mager-OSC wird gemessen.

Die geschilderten Verhältnisse zeigen, dass die Abnahme der mager-fett-OSC ein unmittelbares Maß für die Sinterung des Edelmetalls und damit auch für die Katalysatorschädigung ist. Da die Sauerstoff-Speicherkapazität aber auch eine Funktion der Temperatur ist, kann der Absolutwert der mager-fett-OSC nicht direkt für die On-Board-Diagnostik verwendet werden.

Erfindungsgemäß wird der Grad der Edelmetallsinterung des Katalysators aus dem Quotienten der aktuellen Sauerstoff-Speicherkapazität des Katalysators bei einem sprunghaften Wechsel von einer mageren zu einer fetten Gemischzusammensetzung und der aktuellen Sauerstoff-Speicherkapazität des Katalysators bei einem sprunghaften Wechsel von einer fetten zu einer mageren Gemischzusammensetzung ermittelt. Es ergibt sich als ein Maß der "Rest"-Konvertierungsaktivität des Katalysators der Quotient $R_{EmKat}$ zu:

$$R_{EmKat} = \frac{mager - fett - OSC(alt)}{fett - mager - OSC(alt)}$$

Mit diesem Maß wird explizit der Grad der Edelmetallsinterung als

$$Ems_{Kat} = 1 - R_{EmKat}$$

ausgedrückt, die hauptverantwortlich für den Aktivitätsverlust des gealterten Katalysators ist.

Wo der Grenzwert von $R_{EmKat}$ liegt, bei dem der Katalysator zu tauschen ist, hängt vom Katalysatortyp und auch vom Gesamtfahrzeug ab. Er muss demnach in Dauerlaufuntersuchungen, die ohnedies stets erfolgen, ermittelt werden.

Da unter bestimmten Umständen auch Washcoatschäden auftreten können, welche die fett-mager-OSC ebenfalls abnehmen lassen, wird als weiteres Kriterium der Schädigungszustand der Washcoatstruktur ermittelt. Dieser wird aus dem Quotienten der aktuellen Sauerstoff-Speicherkapazität des Katalysators bei einem sprunghaften Wechsel vom einer fetten zu einer mageren Gemischzusammensetzung und der Sauerstoff-Speicherkapazität eines unbelasteten Katalysators bei einem sprunghaften Wechsel vom einer fetten zu einer mageren Gemischzusammensetzung ermittelt. Es ergibt sich als ein Maß der "Rest"-OSC des Katalysators der Quotient $R_{OSCKat}$ zu:

$$R_{OSCKat} = \frac{fett - mager - OSC(alt)}{fett - mager - OSC(frisch)}$$

Mit diesem Maß wird explizit der Grad der Washcoatschädigung als

$$Wcs_{Kat} = 1 - R_{OSCKat}$$

ausgedrückt.

Dabei wird bei einem neuen Katalysator, der noch nicht mit Schadstoffen beaufschlagt wurde und noch seine vollständige Konvertierungsleistung besitzt, mittels des bekannten OSC-Verfahrens die Sauerstoff-Speicherkapazität des Katalysators bei einem sprunghaften Wechsel vom einer fetten zu einer mageren Gemischzusammensetzung ermittelt. Dieser Wert wird in einem Steuergerät, vorzugsweise im Motorsteuergerät der Brennkraftmaschine, abgespeichert und zur Ermittlung des jeweiligen aktuellen Grades des Schädigungszustandes der Washcoatstruktur und des Alterungsgrades des Katalysators aus dem Speicher abgerufen und entsprechend eingesetzt.

Zur Bestimmung des Alterungsgrades des Katalysators wird der ermittelte Grad der Edelmetallsinterung des Katalysators mit dem ermittelten Grad des Schädigungszustandes der Washcoatstruktur des Katalysators mittels einer OR-Logik oder einer beliebigen anderen logischen oder mathematischen Beziehung verknüpft.

Als besonders vorteilhaft haben sich geeignete Summen- bzw. Produktbildungen aus dem Grad der Edelmetallsinterung des Katalysators und dem ermittelten Grad des Schädigungszustandes der Washcoatstruktur zur Bestimmung des Alterungsgrades des Katalysators erwiesen. Der Alterungsgrad des Katalysators ($Alt_{Kat}$) ergibt sich z. B. zu:

Variante 1:

$$Alt_{Kat} = Ems_{Kat} + Wcs_{Kat}$$

Variante 2:

$$Alt_{Kat} = 1 - R_{EmKat} \times R_{OSCKat}$$

Ausgeschrieben ergibt dies:

Variante 1:

$$Alt_{Kat} = \left[1 - \frac{mager - fett - OSC(alt)}{fett - mager - OSC(alt)}\right] + \left[1 - \frac{fett - mager - OSC(alt)}{fett - mager - OSC(frisch)}\right]$$

Variante 2:

$$Alt_{Kat} = 1 - \frac{mager - fett - OSC(alt)}{fett - mager - OSC(frisch)}$$

Bei einem neuen Katalysator, der noch nicht mit Schadstoffen beaufschlagt wurde und noch seine vollständige Konvertierungsleistung hat, ist $Alt_{Kat} = 0$ und erhöht sich mit der Laufleistung sowohl im Falle von Metallsinterung als auch bei Washcoatschäden.

Ein für einen jeden Katalysator typischer Schwellenwert des zulässigen Alterungsgrades des Katalysators wird in bekannter Weise durch Dauerlaufuntersuchungen ermittelt und im Speicher eines Steuergeräts hinterlegt. Der tatsächlich ermittelte Alterungsgrad des Katalysators wird mit dem abgespeicherten Schwellenwert verglichen, wobei eine Überschreitung des zulässigen Schwellenwertes als Maß für einen notwendigen Katalysatorwechsel dient. Der tatsächlich ermittelte Alterungsgrad des Katalysators kann auch durch das Steuergerät über eine Anzeige am Armaturenbrett angezeigt werden.

Der so ermittelte Alterungsgrad liefert wesentlich zuverlässigere Werte zur Beurteilung der Katalysatoralterung, als es mit dem im Stand der Technik beschriebenen Verfahren möglich wäre. Ein weiterer Vorteil der erfindungsgemäßen Lösung besteht darin, dass zur Ermittlung des Alterungszustandes kein erhöhter Messaufwand benötigt wird.

**Patentansprüche**

1. Verfahren zur Diagnose des Alterungsgrades eines im Abgaskanal einer Brennkraftmaschine angeordneten Katalysators, wobei bei einem sprunghaften Wechsel der der Brennkraftmaschine zugeführten Luft/Kraftstoff-Verhältnisse zwischer einer fetten und mageren Gemischzusammensetzung die Sauerstoff-Speicherkapazität des Katalysators mittels den Signalen einer vor und nach dem Katalysator angeordneten Abgassonde ermittelt wird, **dadurch gekennzeichnet, dass** aus den jeweiligen ermittelten Sauerstoff-Speicherkapazitäten des Katalysators die Schädigung der Konvertierungsaktivität durch Edelmetallsinterung des Katalysators und der Schädigungszustand der Washcoatstruktur des Katalysators ermittelt und durch Verknüpfung der beiden Werte der Alterungsgrad des Katalysators bestimmt wird.

2. Verfahren nach Anspruch 1, **dadurch gekennzeichnet, dass** die Schädigung der Konvertierungsaktivität und daraus der Grad der Edelmetallsinterung des Katalysators aus dem auf 1 normierten Quotienten der aktuellen Sauerstoff-Speicherkapazität des Katalysators bei einem sprunghaften Wechsel vom einer mageren zu einer fetten Gemischzusammensetzung und der aktuellen Sauerstoff-Speicherkapazität des Katalysators bei einem sprunghaften Wechsel vom einer fetten zu einer mageren Gemischzusammensetzung ermittelt wird.

3. Verfahren nach Anspruch 1, **dadurch gekennzeichnet, dass** der Grad des Schädigungszustandes der Washcoatstruktur des Katalysators aus dem auf 1 normierten Quotienten der aktuellen Sauerstoff-Speicherkapazität des Katalysators bei einem sprunghaften Wechsel vom einer fetten zu einer mageren Gemischzusammensetzung und der Sauerstoff-Speicherkapazität eines unbelasteten Katalysators bei einem sprunghaften Wechsel vom einer fetten zu einer mageren Gemischzusammensetzung ermittelt wird.

4. Verfahren nach Anspruch 1 bis 3, **dadurch gekennzeichnet, dass** der Alterungsgrad ($Alt_{Kat}$) des Katalysators aus der Summe des Grades der Edelmetallsinterung des Katalysators und Grad des Schädigungszustandes der Washcoatstruktur des Katalysators nach der Formel

$$Alt_{Kat} = \left[ 1 - \frac{mager - fett - OSC(alt)}{fett - mager - OSC(alt)} \right] + \left[ 1 - \frac{fett - mager - OSC(alt)}{fett - mager - OSC(frisch)} \right]$$

ermittelt wird.

5. Verfahren nach Anspruch 1 bis 3, **dadurch gekennzeichnet, dass** der Alterungsgrad ($Alt_{Kat}$) des Katalysators aus dem auf 1 normierten Produkt der Schädigung der Konvertierungsaktivität durch Edelmetallsinterung des Katalysators und des Schädigungszustandes der Washcoatstruktur des Katalysators nach der Formel

$$Alt_{Kat} = 1 - \frac{mager - fett - OSC(alt)}{fett - mager - OSC(frisch)}$$

ermittelt wird.

EP 1 844 220 B1

**6.** Verfahren nach Anspruch 1 bis 5,
**dadurch gekennzeichnet, dass**
die Überschreitung eines Schwellenwertes des Alterungsgrades des Katalysators als Maß für einen notwendigen Katalysatorwechsel dient.

**7.** Verfahren nach Anspruch 1 bis 6,
**dadurch gekennzeichnet, dass**
für einen neu eingesetzten Katalysator die Sauerstoff-Speicherkapazität des Katalysators bei einem sprunghaften Wechsel vom einer fetten zu einer mageren Gemischzusammensetzung ermittelt und in einem Steuergerät zur Ermittlung des jeweiligen aktuellen Grades des Schädigungszustandes der Washcoatstruktur und des Alterungsgrades des Katalysators abgespeichert wird.

**8.** Verfahren nach Anspruch 1 bis 7,
**dadurch gekennzeichnet, dass**
die Verknüpfung des Grades der Edelmetallsinterung des Katalysators mit dem Grad des Schädigungszustandes der Washcoatstruktur des Katalysators mittels einer OR-Logik oder einer beliebigen anderen logischen oder mathematischen Beziehung erfolgt.

**9.** Verfahren nach Anspruch 1 bis 8,
**dadurch gekennzeichnet, dass**
über ein Steuergerät der Alterungsgrad des Katalysators angezeigt wird.


**Claims**

**1.** Method for diagnosing the degree of ageing of a catalytic converter arranged in the exhaust duct of an internal combustion engine, wherein when there is a sudden change in the air/fuel ratios fed to the internal combustion engine, between a rich mixture composition and a lean mixture composition, the oxygen storage capacity of the catalytic converter is determined by means of the signals of an exhaust gas probe arranged upstream and downstream of the catalytic converter, **characterized in that** the damage to the conversion activity due to sintering of noble metal of the catalytic converter and the degree of damage to the washcoat structure of the catalytic converter are determined on the basis of the respective, determined oxygen storage capacities of the catalytic converter and the degree of ageing of the catalytic converter is identified by logically combining the two values.

**2.** Method according to Claim 1, **characterized in that** the damage to the conversion activity and therefrom the degree of noble metal sintering of the catalytic converter are determined from the quotient, standardized to 1, of the current oxygen storage capacity of the catalytic converter when there is a sudden change from a lean mixture composition to a rich mixture composition and from the current oxygen storage capacity of the catalytic converter when there is a sudden change from a rich mixture composition to a lean mixture composition.

**3.** Method according to Claim 1, **characterized in that** the degree of the state of damage to the washcoat structure of the catalytic converter is determined from the quotient, standardized to 1, of the current oxygen storage capacity of the catalytic converter when there is a sudden change from a rich mixture composition to a lean mixture composition and from the oxygen storage capacity of an unloaded catalytic converter when there is a sudden change from a rich mixture composition to a lean mixture composition.

**4.** Method according to Claims 1 to 3, **characterized in that** the degree of ageing ($Age_{Cat}$) of the catalytic converter is determined from the sum of the degree of the noble metal sintering of the catalytic converter and the degree of the state of damage to the washcoat structure of the catalytic converter according to the formula

$$Age_{Cat} = \left[1 - \frac{lean-rich-OSC(old)}{rich-lean-OSC(old)}\right] + \left[1 - \frac{rich-lean-OSC(old)}{rich-lean-OSC(fresh)}\right]$$

**5.** Method according to Claims 1 to 3, **characterized in that** the degree of ageing ($Age_{Cat}$) of the catalytic converter is determined from the product, standardized to 1, of the damage to the conversion activity due to noble metal

6

sintering of the catalytic converter and the state of damage to the washcoat structure of the catalytic converter according to the formula

$$Age_{Cat} = 1 - \frac{lean - rich - OSC(old)}{rich - lean - OSC(fresh)}$$

6.  Method according to Claims 1 to 5, **characterized in that** the degree of ageing of the catalytic converter exceeding a threshold value serves as a measure for a necessary change of the catalytic converter.

7.  Method according to Claims 1 to 6, **characterized in that** for a newly employed catalytic converter the oxygen storage capacity of the catalytic converter is determined when there is a sudden change from a rich mixture composition to a lean mixture composition and it is stored in a control unit for determining the respective current degree of the state of damage to the washcoat structure and the degree of ageing of the catalytic converter.

8.  Method according to Claims 1 to 7, **characterized in that** the logic combination of the degree of noble metal sintering of the catalytic converter with the degree of the state of damage to the washcoat structure of the catalytic converter is carried out by means of an OR logic or any other logical or mathematical relationship.

9.  Method according to Claims 1 to 8, **characterized in that** the degree of ageing of the catalytic converter is displayed by means of a control unit.

**Revendications**

1.  Procédé de diagnostic du degré de vieillissement d'un catalyseur disposé dans le de gaz d'échappement d'un moteur à combustion interne, dans lequel lors d'un passage brusque du rapport air-carburant apporté au moteur à combustion interne d'un mélange de composition riche à un mélange de composition pauvre, la capacité d'accumulation d'oxygène du catalyseur est déterminée au moyen de signaux de sondes de gaz d'échappement disposées respectivement en amont et en aval du catalyseur,
    **caractérisé en ce que**
    à partir des capacités d'accumulation d'oxygène déterminées du catalyseur, la dégradation de l'activité de conversion par frittage du métal noble du catalyseur et le degré de dégradation de la structure du revêtement du catalyseur sont déterminés et le degré de vieillissement du catalyseur est déterminé par association de deux valeurs.

2.  Procédé selon la revendication 1, **caractérisé en ce que** la dégradation de l'activité de conversion et de là le degré de frittage du métal noble du catalyseur est déterminée à partir du quotient normé à 1 entre la capacité effective d'accumulation d'oxygène du catalyseur lors d'un passage brusque d'un mélange de composition pauvre à un mélange de composition riche et la capacité effective d'accumulation de l'oxygène du catalyseur dans un passage brusque d'un mélange de composition riche à un mélange de composition pauvre.

3.  Procédé selon la revendication 1, **caractérisé en ce que** le degré de dégradation de la structure du revêtement du catalyseur est déterminé à partir du quotient normé à 1 entre la capacité effective d'accumulation d'oxygène du catalyseur lors d'un passage brusque d'un mélange de composition pauvre à un mélange de composition riche et la capacité effective d'accumulation de l'oxygène du catalyseur dans un passage brusque d'un mélange de composition riche à un mélange de composition pauvre.

4.  Procédé selon les revendications 1 à 3, **caractérisé en ce que** le degré de vieillissement ($Alt_{Kat}$) du catalyseur est déterminé à partir de la somme du degré de frittage du métal noble du catalyseur et du degré de l'état de dégradation de la structure du revêtement du catalyseur est déterminé par la formule :

$$Alt_{Kat} = \left[ 1 - \frac{pauvre - riche - OSC(vieilli}{riche - pauvre - OSC(vieilli)} \right] + \left[ 1 - \frac{riche - pauvre - OSC(vieilli)}{riche - pauvre - OSC(frais)} \right]$$

**5.** Procédé selon les revendications 1 à 3, **caractérisé en ce que** le degré de vieillissement ($Alt_{Kat}$) du catalyseur est déterminé à partir du produit normé à 1 de la dégradation de l'activité de conversion par frittage du métal noble du catalyseur et de l'état de dégradation de la structure du revêtement du catalyseur, par la formule :

$$Alt_{Kat} = 1 - \frac{pauvre - riche - OSC(vieilli)}{riche - pauvre - OSC(frais)}$$

**6.** Procédé selon les revendications 1 à 5, **caractérisé en ce que** le déplacement d'une valeur de seuil du degré de vieillissement du catalyseur sert de mesure de la nécessité de remplacer le catalyseur.

**7.** Procédé selon les revendications 1 à 6, **caractérisé en ce que** pour un catalyseur nouvellement installé, la capacité d'accumulation d'oxygène du catalyseur est déterminée lors d'un passage brusque d'un mélange de composition riche à un mélange de composition pauvre et est conservé en mémoire dans un appareil de commande pour déterminer le degré effectif de l'état de dégradation de la structure du revêtement et du degré de vieillissement du catalyseur.

**8.** Procédé selon les revendications 1 à 7, **caractérisé en ce que** l'association entre le degré de frittage du métal noble du catalyseur et le degré de l'état de dégradation de la structure du revêtement du catalyseur s'effectue au moyen d'une logique OU ou d'une autre relation logique ou mathématique quelconque.

**9.** Procédé selon les revendications 1 à 8, **caractérisé en ce que** le degré de vieillissement du catalyseur est affiché par un appareil de commande.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4211116 A1
- DE 19953601 C2
- DE 19801626 A1
- DE 10305452 A1
- DE 10137134 B4